# EUROPEAN PATENT APPLICATION

(11) **EP 3 200 045 A1**
(43) Date of publication of application: **02.08.2017**
(21) Application number: 16194668.6
(22) Date of filing: 19.10.2016
(51) Int. Cl.: G06F 3/01, G06F 1/16, G06F 3/03

(54) **GESTURE CONTROL USING DEPTH DATA**

(30) Priority: 26.10.2015 US 201514922930
(71) Applicant: Lenovo (Singapore) Pte. Ltd., Singapore 556741 (SG)
(72) Inventor: Schwarz, David Alexander, Morrisville, NC North Carolina 27560 (US); Qian, Ming, Cary, NC North Carolina 27519 (US); Wang, Song, Cary, NC North Carolina 27519 (US); Guo, Xiaobing, Beijing, Beijing (CN)
(74) Representative: Leffers, Thomas

(57) **Abstract**

One embodiment provides a method, including: receiving, from at least one sensor of a band shaped wearable device, depth data, wherein the depth data is based upon a gesture performed by a user and wherein the depth data comprises data associated with a distance between the gesture and the band shaped wearable device; identifying, using a processor, the gesture performed by a user using the depth data; and performing an action based upon the gesture identified. Other aspects are described and claimed.

## Description

### BACKGROUND

Information handling devices ("devices"), for example, cell phones, smart phones, tablet devices, laptop computers, personal computers, and the like, allow users to provide input through a variety of sources. For example, a user can provide input to devices through a standard keyboard, touch input, audio input, gesture input, and the like. Some of these devices are additionally being coupled with wearable devices. A user may provide input to the wearable device which then sends instructions based upon the input to the coupled device. Wearable devices, however, are generally small and provide limited user input options, for example, most wearable devices are limited to small input screens or audio input devices.

### BRIEF SUMMARY

In summary, one aspect provides a method, comprising: receiving, from at least one sensor of a band shaped wearable device, depth data, wherein the depth data is based upon a gesture performed by a user and wherein the depth data comprises data associated with a distance between the gesture and the band shaped wearable device; identifying, using a processor, the gesture performed by a user using the depth data; and performing an action based upon the gesture identified.

Another aspect provides a wearable device, comprising: a band shaped wearable housing; at least one sensor disposed on the band shaped wearable housing; a processor operatively coupled to the at least one sensor and housed by the band shaped wearable housing; a memory that stores instructions executable by the processor to: receive, from the at least one sensor, depth data, wherein the depth data is based upon a gesture performed by a user and wherein the depth data comprises data associated with a distance between the gesture and the band shaped wearable device; identify the gesture performed by a user using the depth data; and perform an action based upon the gesture identified.

A further aspect provides a product, comprising: a storage device that stores code executable by a processor, the code comprising: code that receives, from at least one sensor of a band shaped wearable device, depth data, wherein the depth data is based upon a gesture performed by a user and wherein the depth data comprises data associated with a distance between the gesture and the band shaped wearable device; code that identifies the gesture performed by a user using the depth data; and code that performs an action based upon the gesture identified.

The foregoing is a summary and thus may contain simplifications, generalizations, and omissions of detail; consequently, those skilled in the art will appreciate that the summary is illustrative only and is not intended to be in any way limiting.

For a better understanding of the embodiments, together with other and further features and advantages thereof, reference is made to the following description, taken in conjunction with the accompanying drawings. The scope of the invention will be pointed out in the appended claims.

### BRIEF DESCRIPTION OF THE SEVERAL VIEWS OF THE DRAWINGS

FIG. 1 illustrates an example of information handling device circuitry.
FIG. 2 illustrates another example of information handling device circuitry.
FIG. 3 illustrates an example method of gesture control using depth data.
FIG. 4 illustrates an example image creation from two sensor locations.

### DETAILED DESCRIPTION

It will be readily understood that the components of the embodiments, as generally described and illustrated in the figures herein, may be arranged and designed in a wide variety of different configurations in addition to the described example embodiments. Thus, the following more detailed description of the example embodiments, as represented in the figures, is not intended to limit the scope of the embodiments, as claimed, but is merely representative of example embodiments.

Reference throughout this specification to "one embodiment" or "an embodiment" (or the like) means that a particular feature, structure, or characteristic described in connection with the embodiment is included in at least one embodiment. Thus, the appearance of the phrases "in one embodiment" or "in an embodiment" or the like in various places throughout this specification are not necessarily all referring to the same embodiment.

Furthermore, the described features, structures, or characteristics may be combined in any suitable manner in one or more embodiments. In the following description, numerous specific details are provided to give a thorough understanding of embodiments. One skilled in the relevant art will recognize, however, that the various embodiments can be practiced without one or more of the specific details, or with other methods, components, materials, et cetera. In other instances, well known structures, materials, or operations are not shown or described in detail to avoid obfuscation.

Wearable devices, e.g., smart watches, have been introduced as a method for providing user input to a device (e.g., laptop computer, tablet, smart phone, cell phone, personal computer, smart TV, etc.). The user may provide input to the wearable device. The wearable device may then process the input and perform an action based on the input or may provide instructions to a device the user is trying to control. However, wearable devices are generally crippled by limited user input due to restricted input options. The input options are generally limited to small device screens and audio input devices. Therefore, natural language processing (NLP) is the only real option for wearable device interaction, besides limited touch input. Gesture input is being introduced as an input method, but has its own restrictions.

One type of gesture detection uses a camera connected to a device. The camera may detect a gesture and then the device may process the gesture to perform an action. The problem with this type of gesture detection is that the camera is attached to a stationary device platform, for example, personal computer, gaming system, and the like, due to the necessity of processing power. Additionally, these types of gesture detection modules generally detect gestures associated with the whole body from a distance away from the device, and therefore require higher emission, power, and processing capabilities.

Another type of gesture detection relies on radio waves to accurately detect finger locations. This gesture detection gives a high resolution mapping of a user's fingertips to detect movement and track motions performed by the user. One problem with this approach is that the user has to provide gestures at a particular location for the radio waves to accurately detect what gestures the user may be performing. Additionally, the chip for detecting radio waves has to be installed on the device that the user is attempting to control. In other words, with both approaches (i.e., the use of a camera and the radio waves for gesture detection) the device that is being controlled must have the gesture detection component installed.

One method for detecting gestures on or using a portable device is dependent on motion units (e.g., accelerometers, gyroscopes, inertial motion units, etc.) to identify if a user is moving and in what direction. Using these types of sensors for gesture detection only allows for a very small subset of gestures to be recognized, for example, the user has to be moving. Even then the detection of the gesture is very rudimentary. Additionally, different gestures cannot be distinguished if the movement associated with the different gestures is the same for each of the gestures.

Another type of gesture detection, which allows detection of gestures using a portable device, is using electromyography (EMG) and electrical potential to detect gestures and hand and/or finger postures. In such an approach, EMG sensors detect movements by detecting a difference in electrical potential caused by a movement of a user's muscle. The issue with this approach is that EMG signals are very noisy and it is difficult to discern a gesture signal from the noise signal. In other words, if a user performs a small gesture, the device may not be able to identify that the user has performed an action due to the noise of the signal. Additionally, because the signal is noisy, it may be difficult to distinguish between two somewhat similar gestures performed by a user. Generally, because of the noisiness of the EMG signals, the use of multiple types of sensors or supplementary data is necessary for accurate gesture recognition.

These technical issues present problems for gesture detection using a portable device. Most gesture detection devices are installed on the device which is processing the gestures and being controlled and are typically not portable, at least for small devices. Additionally, interacting with devices through gesture recognition can be difficult in that typical gesture recognition technology is not natural, meaning the user has to perform specific gestures which may not be the most natural action to perform a specific function. Additionally, the gesture recognition may depend on sensors within the device that require the user to make large gesture motions which may not be a natural way of interaction.

Accordingly, an embodiment provides a method of one-handed gesture detection on a portable device. An embodiment may receive depth data, based upon a gesture performed by a user, from at least one sensor coupled to a wearable device. For example, in one embodiment, the depth data may be received from an infrared sensor. One embodiment may include more than one sensor. For example, an embodiment may include a band that has one sensor located at a position on the top of a user's wrist and a second sensor located at a position on the bottom of the user's wrist.

Using the depth data, an embodiment may then form an image that identifies the position of the user's hand and fingers. With more than one sensor, an embodiment may have two images which may then be combined together to create a single image to be sent to a device for processing. Using this image information, an embodiment may identify the gesture and perform an action based upon the gesture identified. The action may include performing an action on the wearable device having the sensors, for example, a smart watch. In one embodiment, the action may including using the detected gesture to provide instructions to a secondary device. For example, an armband may be used to detect the gestures and send instructions to a secondary device the user is controlling.

An embodiment may additionally receive non-optical data, for example, audio data, motion data, pressure data, and the like. Using this additional data, an embodiment may be able to more accurately identify the gesture performed by the user. For example, using motion data, an embodiment may be able to determine if the gesture is a static gesture or a dynamic gesture. As another example, using audio data, an embodiment may receive user input confirming that an action is being correctly or incorrectly performed.

The illustrated example embodiments will be best understood by reference to the figures. The following description is intended only by way of example, and simply illustrates certain example embodiments.

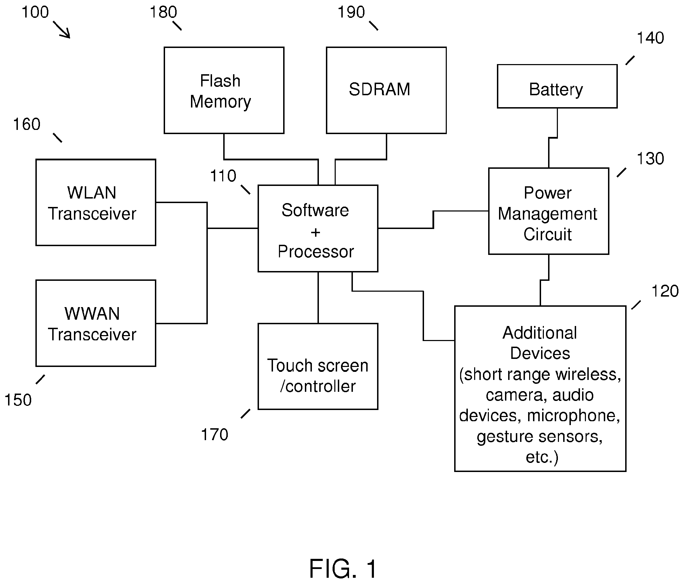

While various other circuits, circuitry or components may be utilized in information handling devices, with regard to smart phone and/or tablet circuitry 100, an example illustrated in FIG. 1 includes a system on a chip design found for example in tablet or other mobile computing platforms. Software and processor(s) are combined in a single chip 110. Processors comprise internal arithmetic units, registers, cache memory, busses, I/O ports, etc., as is well known in the art. Internal busses and the like depend on different vendors, but essentially all the peripheral devices (120) may attach to a single chip 110. The circuitry 100 combines the processor, memory control, and I/O controller hub all into a single chip 110. Also, systems 100 of this type do not typically use SATA or PCI or LPC. Common interfaces, for example, include SDIO and I2C.

There are power management chip(s) 130, e.g., a battery management unit, BMU, which manage power as supplied, for example, via a rechargeable battery 140, which may be recharged by a connection to a power source (not shown). In at least one design, a single chip, such as 110, is used to supply BIOS like functionality and DRAM memory.

System 100 typically includes one or more of a WWAN transceiver 150 and a WLAN transceiver 160 for connecting to various networks, such as telecommunications networks and wireless Internet devices, e.g., access points. Additionally, devices 120 are commonly included, e.g., a gesture sensor such as a infrared sensor. System 100 often includes a touch screen 170 for data input and display/rendering. System 100 also typically includes various memory devices, for example flash memory 180 and SDRAM 190.

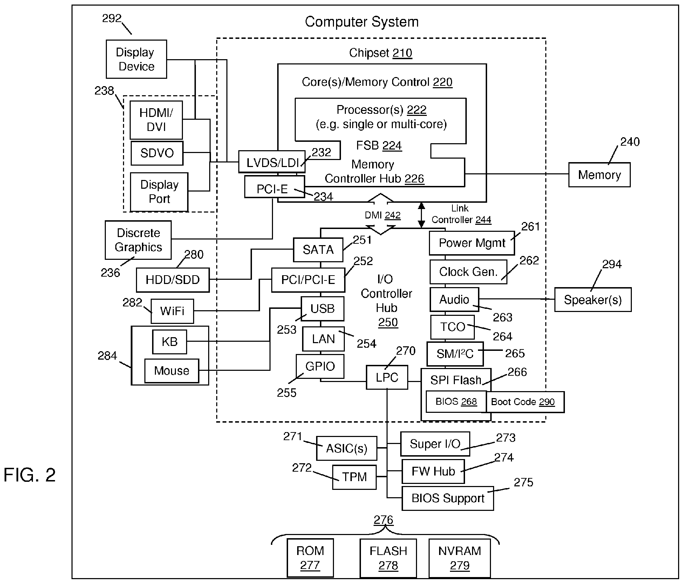

FIG. 2 depicts a block diagram of another example of information handling device circuits, circuitry or components. The example depicted in FIG. 2 may correspond to computing systems such as the THINKPAD series of personal computers sold by Lenovo (US) Inc. of Morrisville, NC, or other devices. As is apparent from the description herein, embodiments may include other features or only some of the features of the example illustrated in FIG. 2.

The example of FIG. 2 includes a so-called chipset 210 (a group of integrated circuits, or chips, that work together, chipsets) with an architecture that may vary depending on manufacturer (for example, INTEL, AMD, ARM, etc.). INTEL is a registered trademark of Intel Corporation in the United States and other countries. AMD is a registered trademark of Advanced Micro Devices, Inc. in the United States and other countries. ARM is an unregistered trademark of ARM Holdings plc in the United States and other countries. The architecture of the chipset 210 includes a core and memory control group 220 and an I/O controller hub 250 that exchanges information (for example, data, signals, commands, etc.) via a direct management interface (DMI) 242 or a link controller 244. In FIG. 2, the DMI 242 is a chip-to-chip interface (sometimes referred to as being a link between a "northbridge" and a "southbridge"). The core and memory control group 220 include one or more processors 222 (for example, single or multi-core) and a memory controller hub 226 that exchange information via a front side bus (FSB) 224; noting that components of the group 220 may be integrated in a chip that supplants the conventional "northbridge" style architecture. One or more processors 222 comprise internal arithmetic units, registers, cache memory, busses, I/O ports, etc., as is well known in the art.

In FIG. 2, the memory controller hub 226 interfaces with memory 240 (for example, to provide support for a type of RAM that may be referred to as "system memory" or "memory"). The memory controller hub 226 further includes a low voltage differential signaling (LVDS) interface 232 for a display device 292 (for example, a CRT, a flat panel, touch screen, etc.). A block 238 includes some technologies that may be supported via the LVDS interface 232 (for example, serial digital video, HDMI/DVI, display port). The memory controller hub 226 also includes a PCI-express interface (PCI-E) 234 that may support discrete graphics 236.

In FIG. 2, the I/O hub controller 250 includes a SATA interface 251 (for example, for HDDs, SDDs, etc., 280), a PCI-E interface 252 (for example, for wireless connections 282), a USB interface 253 (for example, for devices 284 such as a digitizer, keyboard, mice, cameras, gesture sensors, microphones, storage, other connected devices, etc.), a network interface 254 (for example, LAN), a GPIO interface 255, a LPC interface 270 (for ASICs 271, a TPM 272, a super I/O 273, a firmware hub 274, BIOS support 275 as well as various types of memory 276 such as ROM 277, Flash 278, and NVRAM 279), a power management interface 261, a clock generator interface 262, an audio interface 263 (for example, for speakers 294), a TCO interface 264, a system management bus interface 265, and SPI Flash 266, which can include BIOS 268 and boot code 290. The I/O hub controller 250 may include gigabit Ethernet support.

The system, upon power on, may be configured to execute boot code 290 for the BIOS 268, as stored within the SPI Flash 266, and thereafter processes data under the control of one or more operating systems and application software (for example, stored in system memory 240). An operating system may be stored in any of a variety of locations and accessed, for example, according to instructions of the BIOS 268. As described herein, a device may include fewer or more features than shown in the system of FIG. 2.

Information handling device circuitry, as for example outlined in FIG. 1 or FIG. 2, may be used in devices such as tablets, smart phones, personal computer devices generally, and/or electronic devices which users may control using gestures. For example, the circuitry outlined in FIG. 1 may be implemented in a tablet or smart phone embodiment which a user may use to control other devices through gesture control. The circuitry outlined in FIG. 2 may be implemented in a personal computer embodiment, which a user may be attempting to control through the use of gestures.

The example of capturing data relating to a user's hand and/or fingers and use of an armband or wrist-mounted wearable device is used herein for ease of understanding. However, as can be understood, the methods and systems described herein may be used in other systems. For example, the systems and methods as described herein may be used for gesture sensing in alternative reality games or programs which may detect whole body gestures.

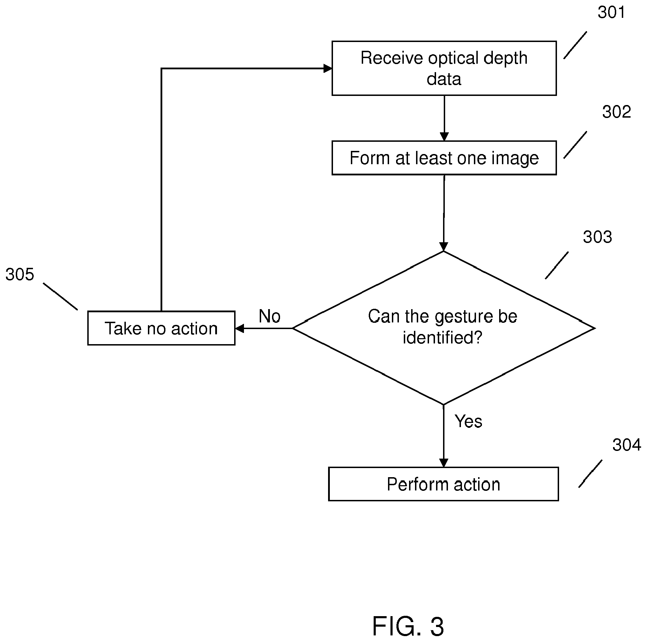

Referring now to FIG. 3, at 301, an embodiment may receive depth data, based upon a gesture performed by a user, from at least one sensor of a band shaped wearable device. For example, a smart watch or armband may contain an infrared sensor which may detect depth data. Alternatively, the sensor may be operatively coupled to the band shaped wearable device. The depth data may give an indication of the distance between the detected gesture and the band shaped wearable device. For example, the depth data may be based upon radio waves, Doppler, infrared rays, and the like.

The sensors may be low-power optical depth sensors, for example, infrared light-emitting diodes (LEDs). The sensors may be positioned on the wearable device to ensure that a sensor with a short depth sensing area may be used, which allows for a sensor having low transmission and/or low power to be used. The sensor may also have a wide field of view (FOV) in order to capture depth data relating to the user's entire hand and/or fingers. Additionally, in order to capture the most accurate depth data, the sensors may be positioned in a way that allows capturing depth data associated with the user's entire hand, for example, the sensor may be angled towards the user's hand.

One embodiment may include more than one sensor. For example, one sensor may be located at a position on the top of the user's wrist and another sensor may be located on the bottom of the user's wrist. The use of more than one sensor may be used to provide more accurate depth data relating to both the top and the bottom of the user's hand. For example, the use of two sensors may detect when a user has folded their fingers under their hand as opposed to a single sensor which may not be able to distinguish between fingers being folded and fingers being pointed straight out from the wrist.

At 302, an embodiment may form at least one image associated with the gesture performed by the user. For example, an embodiment may use the sensor data to form an image corresponding to the position or posture of the user's hand and/or fingers. The image may not be a picture or other typical image. Rather, the image may be a visualization of the user's hand and/or finger placement. For example, using infrared technology a thermal image, hyperspectral image, or other type of image may be created. Alternatively, the image may comprise dots or points comprising some measure of the distance the point is from the sensor, which may allow a processor to determine the hand and finger placement.

In creating the image, an embodiment may use a time of flight calculation. For example, an embodiment, knowing the position of the sensor, may calculate the length of time required for a signal to bounce back to the signal. From this information, an embodiment may extract the location of features associated with the hand. Another method for creating an image may include using structured light. In this process, a known pattern is projected onto a scene. The deformation of the pattern allows calculation of depth and surface information for the objects in the scene. Other methods of creating an image are possible and contemplated, for example, red-green-blue (RGB) stereoscopy, pseudostereoscopy, and the like.

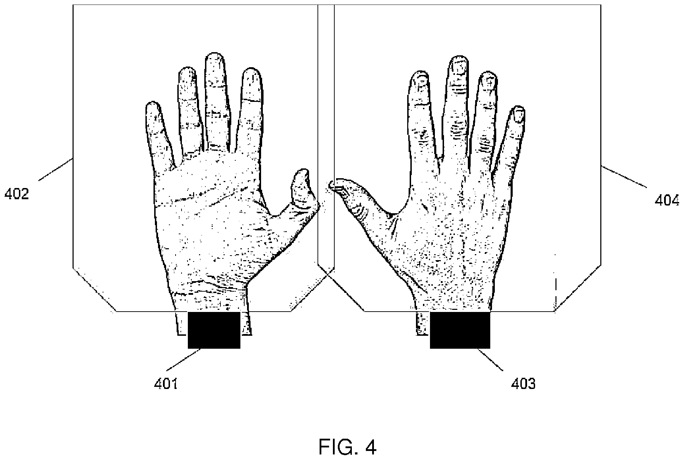

In the case of more than one sensor, an image may be created from the sensor data received from each of the sensors. For example, referring to FIG. 4, a sensor located on the bottom or ventral side of a user's wrist 401 may capture optical data which results in an image of the bottom of the user's hand 402. A sensor located on the top or dorsal side of a user's wrist 403 may capture optical data which results in an image of the top of the user's hand 404. The position of the sensors 401 and 403 with respect to the user's hand may provide a field of view of the images 402 and 404 that result in an overlap, ensuring that the whole hand is captured. In a case having two images, the images may be registered, which may include a pixel to pixel alignment to ensure that the images are aligned with each other. The images or signal streams may then be fused to create a single signal stream or image, for example, a three-dimensional image, a contoured two-dimensional image, a two-dimensional image, and the like. For example, an embodiment may receive depth data from two sensors and create two images, one for each sensor. The two images may then be fused together to form an overall view of the hand form. This signal stream or image may then be passed to a device.

Using the image formed at 302, an embodiment may determine if a gesture can be identified from the image at 303. In identifying the gesture, an embodiment may compare the image to previously stored data, for example, a gesture library. For example, the hand form may be modeled to choose the shape of the hand from a gesture library. The gesture library may be a default library including different preloaded gestures. Alternatively, the library may be built by a user, for example, through a training session, or may be built during use, for example, as a user uses the device gestures may be registered and stored for future use. The gesture library may be located locally on a device or may be stored remotely. The gesture library may also be updated by a third-party. For example, as other users perform gestures, the gesture library may be adjusted to more closely represent different gestures. As another example, if an application developer has an application that requires specific gestures, the gesture library may be updated by the application developer to include the required gestures.

Another way to identify the gesture may be by passing the image to a decision tree of hand postures. The decision tree may, for example, be based on scale-invariant Hough features. The decision tree may also include a classifier that may identify the position of fingers. In identifying the gesture, an embodiment may include a confidence score. The confidence score may relate to how confident the device is that the gesture classification is accurate. Depending on the confidence score, an embodiment may take different actions. For example, if the confidence score is above a particular threshold, an embodiment may continue with the processing. However, if the confidence score is below a particular threshold, an embodiment may request additional input. For example, an embodiment may request the user confirm that the gesture identified is the correct gesture. The confidence score does not necessarily have to be compared to a threshold, but may instead just require a particular value or range.

If a gesture cannot be identified, an embodiment may take no action at 305. An embodiment may additionally wait to receive additional depth data to use in identifying a new gesture or assist in identifying the current gesture. For example, an embodiment may indicate to a user that the gesture was not recognized and request the user perform the gesture again. This new gesture data may be used to augment the old gesture data to get a more accurate gesture representation. Alternatively, an embodiment may determine at 303 that the gesture is not a previously stored gesture or is not associated with an action. In other words, an embodiment may be able to identify the gesture at 303, but may take no action at 305 because the gesture cannot be mapped to an action.

However, if an embodiment can identify a gesture at 303, an embodiment may perform an action based upon the identified gesture at 304. The action may include an action associated with an identified gesture. For example, the gesture may be mapped to or associated with a specific action. As an example, if a user forms a thumbs-up sign with their fingers, this gesture may be associated with accepting an on-screen prompt. The action associated with an action may be predefined, for example, as a default gesture/action association, or may be defined by a user. Additionally, the same gesture may perform different actions, for example, based upon an application running, a user profile (e.g., a user may define gesture/action associations different than another user of the device, etc.), and the like.

In one embodiment, the action performed may include passing gesture data to a secondary device for controlling the secondary device. The gesture data may include the gesture information. For example, a user may be using a smart watch to control a laptop computer. The smart watch may capture and process the depth data to identify a gesture and then pass that gesture to the laptop computer. Alternatively, the gesture data may include instructions for the action associated with the gesture. For example, the device may pass instructions relating to the gesture to a secondary device. For example, an armband may associate a gesture with a "close" action. The armband may send the "close" command to a smart television (TV), rather than sending the gesture for the smart TV to process.

One embodiment may receive data in addition to the depth data. The non-optical data may include movement data associated with the gesture performed by the user. For example, the device may include inertial motion units, accelerometers, gyroscopes, pressure sensors, and the like, that may indicate how the user is moving. This data may be used to more accurately identify the gesture by identifying if the gesture includes movement. For example, using the additional data an embodiment may distinguish between a stationary flat hand and a flat hand moving from left to right. The moving gesture may then be identified, for example, using identification methods discussed above, and an action may be performed based upon the identified moving gesture. For example, the moving gesture may be mapped to a different action than the stationary gesture. The additional data may include audio data. As an example, a user may provide audio data confirming whether the gesture was identified correctly or if the action being performed is the correct action.

Using the depth data, an embodiment may identify a large range of gestures with fine granularity. For example, an embodiment may identify differences between finger movements and hand movements, shakes, rotations, finger positions, and the like. The identification of the gestures may then be translated to actions such as control of coupled devices, one handed control of a wearable device, control of medical devices, fine movements for mouse control or control of if-this-then-that enabled devices, and the like. Additionally, an embodiment may be able to identify if a user is holding an object, which may result in a different action being performed.

The various embodiments described herein thus represent a technical improvement to current gesture control techniques. Using the techniques described herein, an embodiment may detect with a finer granularity the gestures that a user is performing. Thus, a user can interact with a wearable device using a single hand and provide more gesture control than with typical gesture control devices. Additionally, the user may interact with other non-wearable devices using the wearable device to control the non-wearable device, giving the user more freedom and control over more devices in a more natural way.

As will be appreciated by one skilled in the art, various aspects may be embodied as a system, method or device program product. Accordingly, aspects may take the form of an entirely hardware embodiment or an embodiment including software that may all generally be referred to herein as a "circuit," "module" or "system." Furthermore, aspects may take the form of a device program product embodied in one or more device readable medium(s) having device readable program code embodied therewith.

It should be noted that the various functions described herein may be implemented using instructions stored on a device readable storage medium such as a non-signal storage device that are executed by a processor. A storage device may be, for example, an electronic, magnetic, optical, electromagnetic, infrared, or semiconductor system, apparatus, or device, or any suitable combination of the foregoing. More specific examples of a storage medium would include the following: a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a storage device is not a signal and "non-transitory" includes all media except signal media.

Program code embodied on a storage medium may be transmitted using any appropriate medium, including but not limited to wireless, wireline, optical fiber cable, RF, et cetera, or any suitable combination of the foregoing.

Program code for carrying out operations may be written in any combination of one or more programming languages. The program code may execute entirely on a single device, partly on a single device, as a stand-alone software package, partly on single device and partly on another device, or entirely on the other device. In some cases, the devices may be connected through any type of connection or network, including a local area network (LAN) or a wide area network (WAN), or the connection may be made through other devices (for example, through the Internet using an Internet Service Provider), through wireless connections, e.g., near-field communication, or through a hard wire connection, such as over a USB connection.

Example embodiments are described herein with reference to the figures, which illustrate example methods, devices and program products according to various example embodiments. It will be understood that the actions and functionality may be implemented at least in part by program instructions. These program instructions may be provided to a processor of a device, a special purpose information handling device, or other programmable data processing device to produce a machine, such that the instructions, which execute via a processor of the device implement the functions/acts specified.

It is worth noting that while specific blocks are used in the figures, and a particular ordering of blocks has been illustrated, these are non-limiting examples. In certain contexts, two or more blocks may be combined, a block may be split into two or more blocks, or certain blocks may be re-ordered or re-organized as appropriate, as the explicit illustrated examples are used only for descriptive purposes and are not to be construed as limiting.

As used herein, the singular "a" and "an" may be construed as including the plural "one or more" unless clearly indicated otherwise.

This disclosure has been presented for purposes of illustration and description but is not intended to be exhaustive or limiting. Many modifications and variations will be apparent to those of ordinary skill in the art. The example embodiments were chosen and described in order to explain principles and practical application, and to enable others of ordinary skill in the art to understand the disclosure for various embodiments with various modifications as are suited to the particular use contemplated.

Thus, although illustrative example embodiments have been described herein with reference to the accompanying figures, it is to be understood that this description is not limiting and that various other changes and modifications may be affected therein by one skilled in the art without departing from the scope or spirit of the disclosure.

## Claims

1. A method, comprising:
receiving, from at least one sensor of a band shaped wearable device, depth data, wherein the depth data is based upon a gesture performed by a user and wherein the depth data comprises data associated with a distance between the gesture and the band shaped wearable device;
identifying, using a processor, the gesture performed by a user using the depth data; and
performing an action based upon the gesture identified.

2. The method of claim 1, further comprising forming at least one image associated with the gesture performed by a user using the depth data;

3. The method of claim 1, wherein the receiving comprises receiving depth data from at least two sensors of the band shaped wearable device.

4. The method of claim 3, wherein the forming comprises forming at least two images, each image based upon depth data received from one of the at least two sensors.

5. The method of claim 3, further comprising forming a single image by combining the depth data received from the at least two sensors.

6. The method of claim 1, wherein the identifying comprises comparing the depth data to previously stored data.

7. The method of claim 1, further comprising receiving additional data.

8. The method of claim 7, wherein receiving additional data comprises receiving movement data associated with the gesture performed by a user.

9. The method of claim 7, wherein receiving additional data comprises receiving audio data.

10. The method of claim 1, wherein the depth data comprises infrared data.

11. The method of claim 1, wherein the performing an action comprises sending gesture data to an alternate device.

12. A wearable device, comprising:
a band shaped wearable housing;
at least one sensor disposed on the band shaped wearable housing;
a processor operatively coupled to the at least one sensor and housed by the band shaped wearable housing;
a memory that stores instructions executable by the processor to:
receive, from the at least one sensor, depth data, wherein the depth data is based upon a gesture performed by a user and wherein the depth data comprises data associated with a distance between the gesture and the band shaped wearable device;
identify the gesture performed by a user using the depth data; and
perform an action based upon the gesture identified.

13. The wearable device of claim 12, wherein the instructions are further executable by the processor to form at least one image associated with the gesture performed by a user using the depth data.

14. The wearable device of claim 12, wherein to receive comprises receiving depth data from at least two sensors operatively coupled to the wearable device.

15. The wearable device of claim 14, wherein to form comprises forming at least two images, each image based upon depth data received from one of the at least two sensors.

16. The wearable device of claim 14, wherein the instructions are further executable by the processor to form a single image by combining the depth data received from the at least two sensors.

17. The wearable device of claim 12, wherein to identify comprises comparing the depth data to previously stored data.

18. The wearable device of claim 12, wherein the instructions are further executable by the processor to receive additional data.

19. The wearable device of claim 18, wherein to receive additional data comprises receiving movement data associated with the gesture performed by a user.

20. The wearable device of claim 18, wherein to receive additional data comprises receiving audio data.

21. The wearable device of claim 12, wherein to perform an action comprises sending gesture data to an alternate device.

22. A product, comprising:
a storage device that stores code executable by a processor, the code comprising:
code that receives, from at least one sensor of a band shaped wearable device, depth data, wherein the depth data is based upon a gesture performed by a user and wherein the depth data comprises data associated with a distance between the gesture and the band shaped wearable device;
code that identifies the gesture performed by a user using the depth data; and
code that performs an action based upon the gesture identified.
